# EUROPEAN PATENT SPECIFICATION

(11) **EP 1 724 157 B1**
(45) Date of publication and mention of the grant of the patent: **18.08.2010**
(21) Application number: 05380100.7
(22) Date of filing: 19.05.2005
(51) Int. Cl.: B60R 13/02

(54) **Headliner for a vehicle roof with a transparent element**
Dachhimmel für ein Kraftfahrzeugdach mit transparentem Element
Garniture de toit pour véhicule avec un élément transparent

(43) Date of publication of application: 22.11.2006
(73) Proprietor: Grupo Antolin-Ingenieria S.A., 09080 Burgos (ES)
(72) Inventor: Martinez Moral, Francisco Javier, 09002 Burgos (ES); Selgas Caceres, Carlos, 47004 Valladolid (ES); Marcos Gonzalez, Cesar, 09002 Burgos (ES); Gonzalez Merino, Ricardo, 09002 Burgos (ES); Iglesias Sedano, Ricardo, 09002 Burgos (DE)
(74) Representative: Carpintero Lopez, Francisco

(56) References cited:
- GB-A- 220 392
- GB-A- 2 335 397
- US-A- 4 923 245

## Description

### OBJECT OF THE INVENTION

The headliner of the invention is for application to vehicle roofs provided with a transparent element that allows the light to pass through said roof.

The object of the invention is a headliner comprising a conventional interior lining trim that includes guiding means for a concealing element of a concealing system for a transparent element of the vehicle roof, permitting the installation of the interior lining trim and the concealing system in a single operation.

The guiding means are arranged to act as a reinforcing element for the interior lining trim, so that the assembly made up of the interior lining trim and the guiding means form a strong unit capable of withstanding the weight of the concealing system and the stresses generated during its operation.

The object of the invention is also a headliner which includes a concealing system as well as the guiding means.

### BACKGROUND OF THE INVENTION

Today vehicles including transparent elements in their roof are well known. They usually have a concealing system to block or permit the passage of light to the interior of the passenger compartment by way of the aforesaid transparent element.

A concealing system is an assembly that comprises a concealing element, usually a roller blind, a transversal rod fitted at the front edge of the blind to enable it to be pulled out, a coiling body that enables the blind to be stowed away, and operating means that comprise a drive motor and cables or wires that transmit the movement from the drive motor to the concealing element to be pulled out or folded away. These systems sometimes include a cover for the coiling body which comprises at least one skirt that presses on the concealing element to provide a tension that prevents wrinkles from forming.

The rods that enable the blind to be folded out are linked at their ends to operating cables and slide inside guide rails provided in a carrier element fitted with means for fastening them to the vehicle body. These guide rails are normally factory-made by extrusion and usually have a complex section.

The carrier element generally consists of a sealed frame incorporating two longitudinal tiebars, matching up with the guide rails and two cross rails parallel to the front and rear cross members of the vehicle roof structure. This layout involves costly installation and requires several operations to connect up the elements and form a sealed frame, such as bending, screwing and riveting. This frame has to be very strong as it supports all the concealing system components and is therefore usually of considerable thickness and weight.

The concealing system is anchored directly to the vehicle structure by means of the support frame, an interior lining trim being secured to said frame and roof.

These systems have the following drawbacks:
- The manufacturing of the guide rails requires the use of complicated manufacturing and installation methods, such as for instance extruding, bending, die stamping, riveting, etc., which increases the final price of the concealing system..
- The guide rails increase the thickness of the concealing system, thus reducing the vehicle accommodation and establishing a distance from the concealing element to the transparent roof element.
- Considerable weight.

Concealing systems for vehicles are described, for example, in Patents UK 2.220.392, UK 2.335.397, JP 2002274180US-A-4923245 discloses a sun roof construction with a sun roof lid, guide rails and a ceiling structure. JP-A-09226379 discloses an arrangement substantially as defined in the preamble of claim 1.

### DESCRIPTION OF THE INVENTION

The invention is defined in claim 1.

The present invention resolves the problems described on the basis of a conventional interior lining trim incorporating guiding means for a concealing element that are built into the actual interior lining trim and, therefore, connected to and supported by said interior lining trim. A conventional interior lining trim is considered to be a self-supporting multilayer trim provided with one or more openings that permit visual access to one or more transparent elements provided in the vehicle roof.

The concealing element guide means also act as a reinforcement for the interior lining trim, so that the assembly formed of the interior lining trim and the guide means is able to bear the weight of the concealing system and the stresses generated during its operation.

The guiding means are designed to form a light structure without incorporating reinforcing frames of considerable thickness and weight, so that they do not represent an excessive increase in the weight of the interior lining trim and, therefore, would not be capable of supporting the concealing system by themselves. The strength and rigidity necessary to support the concealing system is achieved by means of the sum of the strength supplied by the interior lining trim and by the guiding means. This means that neither the interior lining trim nor the guiding means meet the strength and rigidity requirements by themselves.

In this way, it is possible to fix the assembly made up of the interior lining, together with the guiding means and concealing system, to the vehicle body in a single operation. For this attachment the standard interior lining trim fixing elements are used as well as some additional fixing elements provided in the guiding means.

The guiding means are disposed to match up with the perimeter of the opening or openings in the interior lining trim and comprise guide rails, for sliding the concealing element, and supports that enable the guide rails to be fitted to the interior lining trim, and they act as reinforcing elements for said interior lining trim. These supports are spread over the whole length of the aforesaid guide rails to ensure that they are fastened to the interior lining trim at numerous points, which will achieve an increase in the strength and rigidity of the interior lining trim distributed all round the perimeter of its opening or openings. In this way, small lightweight supports can be used that provide a sufficient increase in the strength of the interior lining trim in order to be able to support the concealing system.

The guiding means also comprise a reinforcement strip that is mounted directly on the interior lining trim, matching up with the perimeter of the opening or openings in the interior lining trim. In this case, the guiding means supports are anchored to this reinforcement strip, thereby conferring greater strength on the assembly with only a small increase in its weight.

To facilitate the production process, it is also foreseen that the guide rails and supports should be obtained as a single piece.

The supports could also be built into the reinforcement strip to form a single piece.

Finally, the reinforcement strip, supports and guide rails could be obtained in a single piece.

The aforesaid concealing system may be, for instance, a single blind system or a double blind system.

The trim of the invention offers the following advantages:
- Reduced weight and size of the whole system. The elimination of the normal support frame, which comprises the front and rear cross rails and the longitudinal rails, represents a reduction in the size and weight of the concealing element support and guide means.
- Reduction in the parts to be assembled. The number of parts making up the system is smaller because there is no support frame.
- Fewer assembly operations. As the concealing system is not a separate part, which has to be fitted independently to the vehicle structure for the interior lining trim to be installed on it afterwards, an assembly operation is eliminated. For the same reason, this also give rise to a reduction in the number of assembly machines and jigs needed, less works space used and fewer personnel involved.
- Less height space needed and, therefore, increased accommodation.
   The space between the interior lining trim and the transparent element needed to house the concealing system is reduced, which means more accommodation space inside the vehicle.
- Impression of quality of the end product. The quality of the fit between the interior lining trim and the concealing element is easier to control as we go from having to control two independent parts that are fitted to the roof, as in current systems, to having to control just one part. This means that greater reliability is achieved in the adjustments between parts and, therefore, an enhanced final overall appearance.

### DESCRIPTION OF THE DRAWINGS

To supplement the description being given and in order to assist a better appreciation of the features of the invention, there is a set of drawings attached as an integral part of said description wherein there is represented, for illustrative but not restrictive purposes, the following:
Figure 1.- It represents an exploded perspective view of the headliner of the invention consisting of an interior lining trim and guiding means for a concealing element, composed of guide rails and supports.
Figure 2.- It represents an exploded perspective view of the headliner of the invention composed of an interior lining trim and guiding means for a concealing element incorporating an additional reinforcement strip.

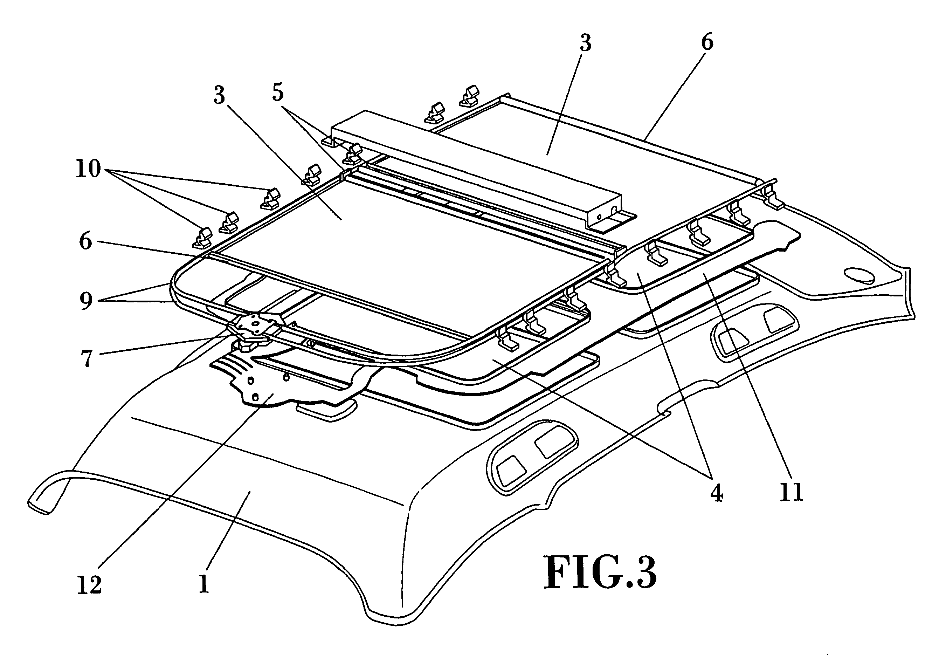

Figure 3.- It represents an exploded perspective view of a headliner according to the object of the invention, composed of the items in figure 2, which also incorporates a double blind concealing system.
Figure 4.- It represents a view from the top, i.e. from the part that faces the vehicle body, of the headliner represented in the previous figure with all the elements properly installed, including a double blind concealing system.

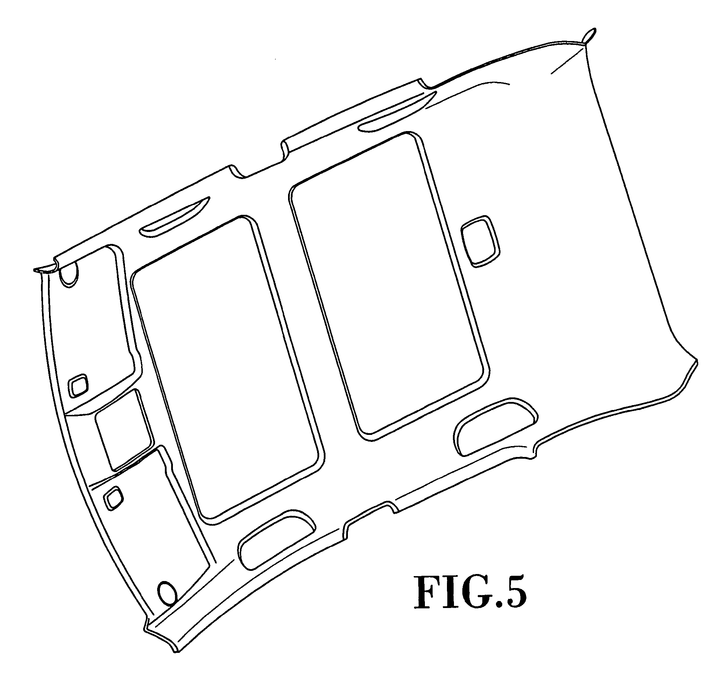

Figure 5.- It represents a view from the top, i.e. from the part that is visible from the vehicle passenger compartment, of the headliner represented in the previous figure with all the elements properly installed, including a double blind concealing system.
Figure 6.- It represents a close view of the guiding means, composed of a hollow tube housing the operating cable and the slider provided at one of the ends of the transversal rod connected to the free end of a blind. This figure also represents an embodiment of the fixing support for said hollow tube.

### PREFERRED EMBODIMENT OF THE INVENTION

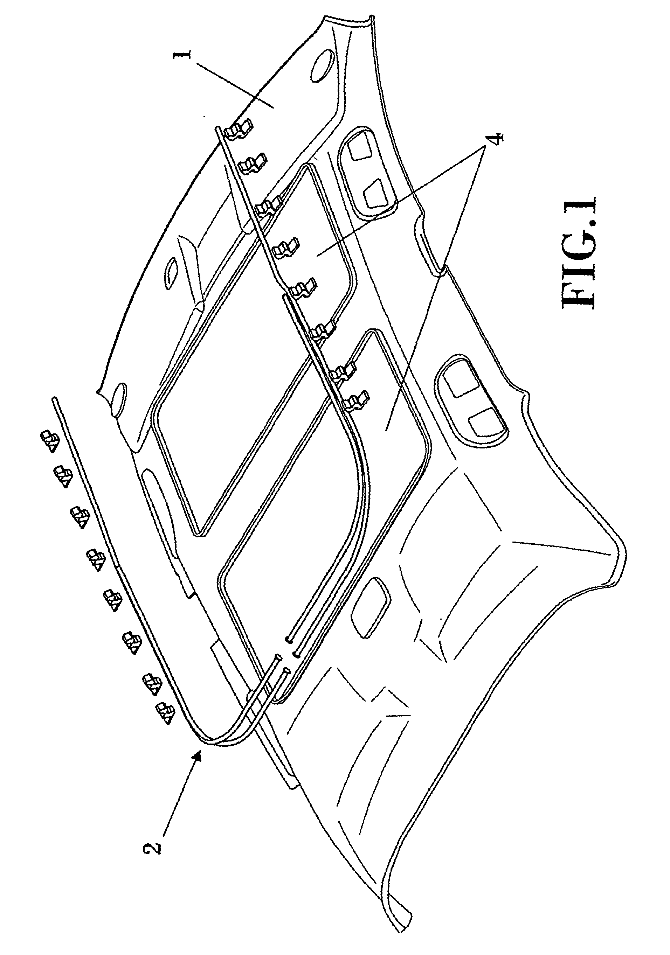

As is seen in figure 1, the vehicle headliner of the invention is composed of a conventional interior lining trim (1) and guiding means (2) for concealing elements (3), as part of a system for the concealment of one or more transparent elements provided in the vehicle roof.

A conventional headliner is taken to mean a multilayer trim which, as may be observed in the above-mentioned figure 1, has one or more openings (4) that provide direct access to the transparent elements of the vehicle roof, as well as a series of elements for fastening the interior lining trim (1) to the vehicle body.

A concealing system is one that comprises all the necessary means to block or permit the passage of light to the interior of the passenger compartment by way of the transparent elements provided in the vehicle roof. A concealing element (3) is a fold-out element, usually a blind, which is disposed matching up with the transparent element in the roof after its concealment.

In the embodiments shown in the figures a vehicle roof trim is represented that has two transparent elements and a concealing system of the so-called "double blind" type.

Said concealing system comprises two concealing elements (3), for instance two blinds, two coiling bodies (5) and transversal rods (6) fitted at the free end of each blind (3) to assist their pulling out. Said concealing system also comprises means for operating each concealing element (3), which, in the embodiment represented, are composed of a motor (7) that moves sliders (13) by way of operating cables (8), as will be described later on. The blinds (3) may be fitted with intermediate reinforcing rods, in a transverse arrangement.

The guiding means are made up of a guide rail (9), for each one of the concealing elements or blind (3), and supports (10) which are spread around the outside edge of the openings (4), forming reinforcement means distributed to improve the strength and rigidity of the interior lining trim (1) as well as to provide support for the concealing system.

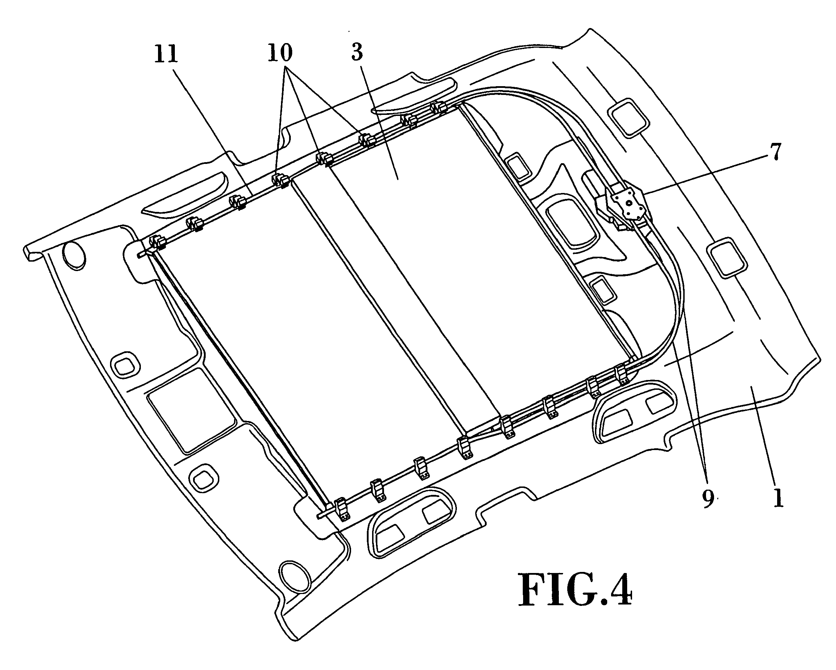

In this way, the headliner represented in figure 4 constitutes a preassembled unit that enables the interior lining trim (1) and the concealing system to be fixed to the vehicle roof in a single operation. The fixing means, not shown, comprise fixing means for a conventional interior lining trim (1) and additional fixing means provided in the guiding means.

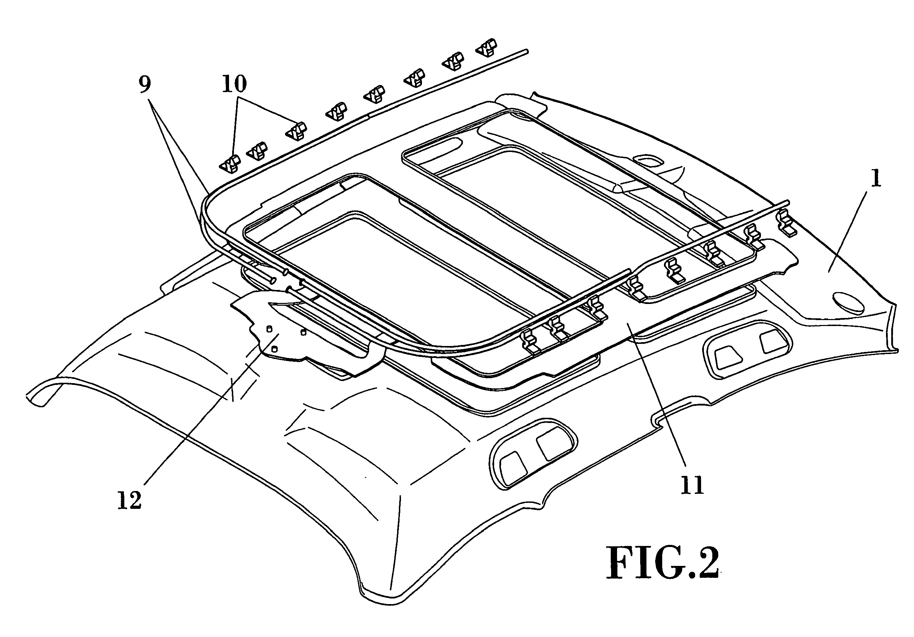

As may be seen in figure 2, the headliner of the invention also comprises a reinforcement strip (11), which is disposed matching up with the perimeter of the openings (4) in the interior lining trim (1) and fixed directly to the aforesaid interior lining trim. As may also be observed in this figure, the guiding means supports (10) are installed on the trim by way of the reinforcement strip (11).

In this case the guiding means supports (10) are installed on the above-mentioned reinforcement strip (11).

The reinforcement strip (11) also includes a support (12) for the concealing element drive motor (7).

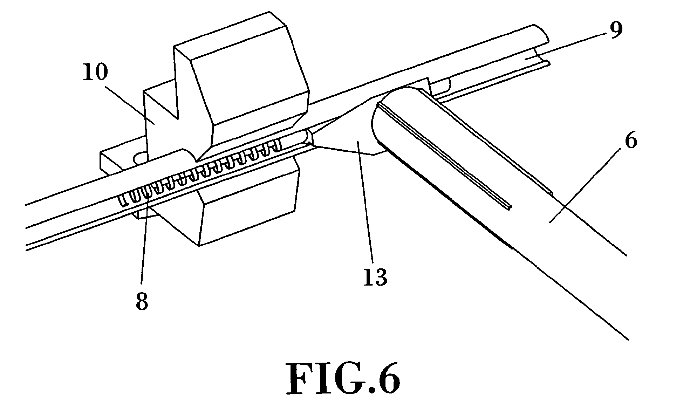

As may be seen in figure 6, the guide rails (9) are made up of hollow slotted tubes housing the operating cables (8) and sliders (13) provided at the ends of transversal rods (6) of the blinds (3). The sliders (13) slide inside the slotted hollow tubes (9) and are connected to the end of the operating cables (8).

Said sliders (13) may be riveted as shown in figure 6, or else superinjected onto the respective operating cables (8).

In the embodiment shown in the figures, four hollow slotted tubes (9), two for each one of the blinds (3), are represented, having different lengths according to the position of each of the blinds (3). Obviously, if the concealing element were made up of a single blind (3), the guiding means would comprise two hollow slotted tubes (9).

In one embodiment of the invention, the guide rails (9) may consist of a single plastic part incorporated in the supports (10) which in turn would be installed on the reinforcement strip (11).

In an alternative embodiment, the reinforcement strip (11) is made up of a plastic part incorporated in the supports (10), or even in another alternative embodiment could also be incorporated in the guide rails (9).

## Claims

1. Headliner for a vehicle roof with a transparent element, which comprises a conventional interior lining trim (1) having at least one opening (4) that permits visual access to the aforesaid transparent element in the roof and provided with means for its fixing to the vehicle body, wherein the interior lining trim comprises guiding means (2) for a concealing element (3), part of a system for concealing the aforesaid transparent element, guiding means (2) which are disposed around the perimeter of the cited at least one opening (4) in said interior lining trim (1), the afore-mentioned guiding means (2) being joined to and supported by said interior lining trim (1), said guiding means (2) acting as a reinforcing element to form, together with the interior lining trim (1), a strong assembly that supports the weight of the concealing system and the stresses generated during its operation;
**characterised in that** said guiding means (2) comprise guide rails (9) and supports (10), the cited supports (10) being spread over the length of the aforesaid guide rails (9), for their fixing to the interior lining trim (1) in numerous points, thereby increasing the rigidity of the interior lining trim in a well-distributed fashion around the perimeter of the cited at least one opening (4).

2. Headliner for a vehicle roof with a transparent element, according to claim 1, **characterised in that** said guiding means (2) also comprise a reinforcement strip (11) mounted on the interior lining trim (1) so as to match up with the perimeter of the cited at least one opening (4) in said interior lining trim (1), said guiding means (2) being fitted on said reinforcement strip (11).

3. Headliner for a vehicle roof with a transparent element, according to claim 1, **characterised in that** said supports and said guide rails are formed in one piece.

4. Headliner for a vehicle roof with a transparent element, according to claim 3, **characterised in that** said piece is a plastic piece.

5. Headliner for a vehicle roof with a transparent element, according to claim 2, **characterised in that** said supports and said reinforcement strip are formed in one piece.

6. Headliner for a vehicle roof with a transparent element, according to claim 5, **characterised in that** said piece is a plastic piece.

7. Headliner for a vehicle roof with a transparent element, according to claim 2, **characterised in that** said supports, said guide rails and said reinforcement strip are formed in one piece.

8. Headliner for a vehicle roof with a transparent element; according to claim 7, **characterised in that** said piece is a plastic piece.

9. Headliner for a vehicle roof with a transparent element, according to any of the foregoing claims, **characterised in that** said concealing element (3) is a blind concealing element.

10. Headliner for a vehicle roof with a transparent element, according to any of the foregoing claims, which comprises a concealing element supported conjointly by the interior lining trim (1) and the guiding means (2), as well as operating means for the concealing element (3).

11. Headliner for a vehicle roof with a transparent element, according to claim 10, **characterised in that** said operating means comprise a motor (7) and at least one operating cable (8).

12. Headliner for a vehicle roof with a transparent element, according to claim 10, **characterised in that** said operating means comprise manual operating means and at least one operating cable (8).

13. Headliner for a vehicle roof with a transparent element, according to claim 10, **characterised in that** the concealing system is made up of at least one blind (3), at least one coiling body (5) and a transversal rod (6) connected to the free end of said at least one blind (3).

14. Headliner for a vehicle roof with a transparent element, according to claim 13, **characterised in that** said at least one blind (3) incorporates at least one intermediate reinforcement rod.

15. Headliner for a vehicle roof with a transparent element, according to claim 13, **characterised in that** said guide rails are made up of at least one hollow slotted tube that acts as a housing for said operating cable (8) and for sliders (13) provided at one end of said transversal rod (6).

16. Headliner for a vehicle roof with a transparent element, according to claim 15, **characterised in that** said sliders (13) have a tubular end (14) with an outer surface that slides under guidance inside the at least one hollow slotted tube and inside which there is housed a portion of the operating cable (8), which has its position locked in relation to said slider (13) by way of bushings (15) riveted to the cable which are disposed at the ends of the tubular portion of the slider.

17. Headliner for a vehicle roof with a transparent element, according to claim 16, **characterised in that** said sliders (13) are superinjected onto the respective operating cables (8).

## Patentansprüche

1. Dachhimmel für ein Kraftfahrzeugdach mit einem transparenten Element, enthaltend eine herkömmliche Innenraum-Himmelauskleidung (1), die wenigstens eine Öffnung (4) hat, die eine Durchsicht zu dem zuvor erwähnten transparenten Element in dem Dach zulässt und mit Einrichtungen zu seiner Befestigung am Kraftfahrzeugkörper versehen ist, wobei die Innenraum-Himmelauskleidung Führungseinrichtungen (2) für ein Abdeckelement (3) hat, das Teil eines Systems zum Abdecken des zuvor erwähnten transparenten Elementes ist, wobei die Führungseinrichtungen (2) den Rand der erwähnten wenigstens einen Öffnung (4) umgebend in der Innenraum-Himmelauskleidung (1) angeordnet sind, die zuvor erwähnten Führungseinrichtungen (2) mit der Innenraum-Himmelauskleidung (1) verbunden und von dieser gehalten sind und die Führungseinrichtungen (2) als Verstärkungselement dienen, um zusammen mit der Innenraum-Himmelauskleidung (1) eine stabile Anordnung zu bilden, die das Gewicht des Abdecksystems und die Belastungen aufnimmt, die während des Betriebs desselben entstehen;
**dadurch gekennzeichnet, dass** die Führungseinrichtungen (2) Führungsschienen (9) und Halterungen (10) enthalten, wobei diese Halterungen (10) über die Länge der zuvor erwähnten Schienen (9) verteilt sind, um an zahlreichen Punkten an der Innenraum-Himmelauskleidung (1) befestigt zu sein, wodurch die Steifigkeit der Innenraum-Himmelauskleidung entlang des Randes der erwähnten wenigstens einen Öffnung gut verteilt erhöht ist.

2. Dachhimmel für ein Kraftfahrzeugdach mit einem transparenten Element nach Anspruch 1, **dadurch gekennzeichnet, dass** die Führungseinrichtungen (2) zudem einen Verstärkungsstreifen (11) enthalten, der an der Innenraum-Himmelauskleidung (1) derart befestigt ist, dass er mit dem Rand der erwähnten wenigstens einen Öffnung (4) in der Innenraum-Himmelauskleidung (1) übereinstimmt, wobei die Führungseinrichtungen (2) an dem Verstärkungsstreifen (11) eingefügt sind.

3. Dachhimmel für ein Kraftfahrzeugdach mit einem transparenten Element nach Anspruch 1, **dadurch gekennzeichnet, dass** die Halterungen und Führungsschienen als ein Teil ausgebildet sind.

4. Dachhimmel für ein Kraftfahrzeugdach mit einem transparenten Element nach Anspruch 3, **dadurch gekennzeichnet, dass** das Teil ein Kunststoffteil ist.

5. Dachhimmel für ein Kraftfahrzeugdach mit einem transparenten Element nach Anspruch 2, **dadurch gekennzeichnet, dass** die Halterungen und der Verstärkungsstreifen als ein Teil ausgebildet sind.

6. Dachhimmel für ein Kraftfahrzeugdach mit einem transparenten Element nach Anspruch 5, **dadurch gekennzeichnet, dass** das Teil ein Kunststoffteil ist.

7. Dachhimmel für ein Kraftfahrzeugdach mit einem transparenten Element nach Anspruch 2, **dadurch gekennzeichnet, dass** die Halterungen, die Führungsschienen und der Verstärkungsstreifen als ein Teil ausgebildet sind.

8. Dachhimmel für ein Kraftfahrzeugdach mit einem transparenten Element nach Anspruch 7, **dadurch gekennzeichnet, dass** das Teil ein Kunststoffteil ist.

9. Dachhimmel für ein Kraftfahrzeugdach mit einem transparenten Element nach einem der vorhergehenden Ansprüche, **dadurch gekennzeichnet, dass** das Abdeckelement (3) ein undurchsichtiges Abdeckelement ist.

10. Dachhimmel für ein Kraftfahrzeugdach mit einem transparenten Element nach einem der vorhergehenden Ansprüche, der ein Abdeckelement, dass gemeinsam von der Innenraum-Himmelauskleidung (1) und den Führungseinrichtungen (2) gehalten ist, wie auch Betätigungseinrichtungen für das Abdeckelement (3) enthält.

11. Dachhimmel für ein Kraftfahrzeugdach mit einem transparenten Element nach Anspruch 10, **dadurch gekennzeichnet, dass** die Betätigungseinrichtungen einen Motor (7) und wenigstens ein Betätigungsseil (8) enthalten.

12. Dachhimmel für ein Kraftfahrzeugdach mit einem transparenten Element nach Anspruch 10, **dadurch gekennzeichnet, dass** die Betätigungseinrichtungen manuelle Betätigungseinrichtungen und wenigstens ein Betätigungsseil (8) enthalten.

13. Dachhimmel für ein Kraftfahrzeugdach mit einem transparenten Element nach Anspruch 10, **dadurch gekennzeichnet, dass** das Abdecksystem aus wenigstens einem Rollo (3), wenigstens einem Aufrollkörper (5) und einer querverlaufenden Stange (6) besteht, die mit dem freien Ende des wenigstens einen Rollos (3) verbunden ist.

14. Dachhimmel für ein Kraftfahrzeugdach mit einem transparenten Element nach Anspruch 13, **dadurch gekennzeichnet, dass** das wenigstens eine Rollo (3) wenigstens eine Zwischenverstärkungsstange enthält.

15. Dachhimmel für ein Kraftfahrzeugdach mit einem transparenten Element nach Anspruch 13, **dadurch gekennzeichnet, dass** die Führungsschienen aus wenigstens einem hohlen, geschlitzten Rohr bestehen, das als Gehäuse für das Betätigungsseil (8) und für Gleiter (13) dient, die an einem Ende der querverlaufenden Stange (6) angebracht sind.

16. Dachhimmel für ein Kraftfahrzeugdach mit einem transparenten Element nach Anspruch 15, **dadurch gekennzeichnet, dass** die Gleiter (13) ein röhrenförmiges Ende (14) haben, das eine Außenoberfläche aufweist, die unter Führung in dem wenigstens einen hohlen, geschlitzten Rohr gleitet, und in dem ein Abschnitt des Betätigungsseils (8) aufgenommen ist, dessen Position im Bezug auf den Gleiter (13) mit Hilfe von Buchsen (15) fixiert ist, die mit dem Seil vernietet und an den Enden des röhrenförmigen Abschnittes des Gleiters angeordnet sind.

17. Dachhimmel für ein Kraftfahrzeugdach mit einem transparenten Element nach Anspruch 16, **dadurch gekennzeichnet, dass** die Gleiter (13) auf die entsprechenden Betätigungsseile (8) aufgegossen sind.

## Revendications

1. Garniture de toit pour véhicule avec un élément transparent, qui comprend un habillage de revêtement intérieur classique (1) ayant au moins une ouverture (4) qui permet l'accès visuel à l'élément transparent précité dans le toit et muni de moyens pour sa fixation à la caisse du véhicule, où l'habillage de revêtement intérieur comprend des moyens de guidage (2) pour un élément de dissimulation (3), faisant partie d'un système pour dissimuler l'élément transparent précité, les moyens de guidage (2) qui sont disposés autour du périmètre de ladite au moins une ouverture précitée (4) dans l'habillage de revêtement intérieur (1), les moyens de guidage précités (2) étant reliés à et supportés par ledit habillage de revêtement intérieur (1), lesdits moyens de guidage (2) agissant comme un élément de renforcement pour former, ensemble avec l'habillage de revêtement intérieur (1), un ensemble solide qui supporte le poids du système de dissimulation et les contraintes produites pendant son fonctionnement;
**caractérisée en ce que** lesdits moyens de guidage (2) comprennent des rails de guidage (9) et des supports (10), les supports cités (10) étant étalés sur la longueur desdits rails de guidage précités (9), pour leur fixation à l'habillage de revêtement intérieur (1) à de nombreux points, en augmentant ainsi la rigidité de l'habillage de revêtement intérieur d'une manière bien distribuée autour du périmètre d'au moins une ouverture citée (4).

2. Garniture de toit pour véhicule avec un élément transparent selon la revendication 1, **caractérisée en ce que** lesdits moyens de guidage (2) comprennent également une bande de renforcement (11) montée sur l'habillage de revêtement intérieur (1) de manière à correspondre au périmètre de ladite au moins une ouverture citée (4) dans ledit habillage de revêtement intérieur (1), lesdits moyens de guidage (2) étant montés sur ladite bande de renforcement (11).

3. Garniture de toit pour véhicule avec un élément transparent selon la revendication 1, **caractérisée en ce que** lesdits supports et lesdits rails de guidage sont réalisés en une pièce.

4. Garniture de toit pour véhicule avec un élément transparent selon la revendication 3, **caractérisée en ce que** ladite pièce est une pièce plastique.

5. Garniture de toit pour véhicule avec un élément transparent selon la revendication 2, **caractérisée en ce que** lesdits supports et ladite bande de renforcement sont réalisés en une pièce.

6. Garniture de toit pour véhicule avec un élément transparent selon la revendication 5, **caractérisée en ce que** ladite pièce est une pièce plastique.

7. Garniture de toit pour véhicule avec un élément transparent selon la revendication 2, **caractérisée en ce que** lesdits supports, lesdits rails de guidage et ladite bande de renforcement sont réalisés en une pièce.

8. Garniture de toit pour véhicule avec un élément transparent selon la revendication 7, **caractérisée en ce que** ladite pièce est une pièce plastique.

9. Garniture de toit pour véhicule avec un élément transparent selon l'une quelconque des revendications précédentes, **caractérisée en ce que** ledit élément de dissimulation (3) est un élément de dissimulation aveugle.

10. Garniture de toit pour véhicule avec un élément transparent selon l'une quelconque des revendications précédentes, qui comprend un élément de dissimulation supporté conjointement par l'habillage de revêtement intérieur (1) et les moyens de guidage (2) ainsi que des moyens fonctionnels pour l'élément de dissimulation (3).

11. Garniture de toit pour véhicule avec un élément transparent selon la revendication 10, **caractérisée en ce que** lesdits moyens fonctionnels comprennent un moteur (7) et au moins un câble de fonctionnement (8).

12. Garniture de toit pour véhicule avec un élément transparent selon la revendication 10, **caractérisée en ce que** lesdits moyens fonctionnels comprennent des moyens fonctionnels manuels et au moins un câble d'opération (8).

13. Garniture de toit pour véhicule avec un élément transparent selon la revendication 10, **caractérisée en ce que** le système de dissimulation est formé par au moins un store (3), au moins un corps d'enroulement (5) et une tige transversale (6) reliée à l'extrémité libre dudit au moins un store (3).

14. Garniture de toit pour véhicule avec un élément transparent selon la revendication 13, **caractérisée en ce que** ledit au moins un store (3) incorpore au moins une tige de renforcement intermédiaire.

15. Garniture de toit pour véhicule avec un élément transparent selon la revendication 13, **caractérisée en ce que** lesdits rails de guidage sont formés par au moins un tube fendu creux qui agit comme un boîtier pour ledit câble d'opération (8) et pour des coulisseaux (13) réalisés à une extrémité de la tige transversale (6).

16. Garniture de toit pour véhicule avec un élément transparent selon la revendication 15, **caractérisée en ce que** lesdits coulisseaux (13) ont une extrémité tubulaire (14) avec une surface extérieure qui glisse sous guidance à l'intérieur du au moins un tube fendu creux et à l'intérieur duquel est logée une portion du câble de fonctionnement (8) dont la position est verrouillée relativement audit coulisseau (13) par des douilles (15) rivées au câble qui sont disposées aux extrémités de la portion tubulaire du coulisseau.

17. Garniture de toit pour véhicule avec un élément transparent selon la revendication 16, **caractérisée en ce que** lesdits coulisseaux (13) sont superinjectés sur les câbles de fonctionnement respectifs (8).
